# EUROPÄISCHE PATENTANMELDUNG

(11) **EP 1 094 165 A2**
(43) Veröffentlichungstag der Anmeldung: **25.04.2001**
(21) Anmeldenummer: 00117882.1
(22) Anmeldetag: 19.08.2000
(51) Int. Cl.: E04B 1/90

(54) **Wärme- und/oder Schalldämmelement**

(30) Priorität: 23.10.1999 DE 19951105
(71) Anmelder: Deutsche Rockwool Mineralwoll-GmbH, 45966 Gladbeck (DE)
(72) Erfinder: Klose, Gerd-Rüdiger, Dr., 46286 Dorsten (DE)
(74) Vertreter: Wanischeck-Bergmann, Axel, Dipl.-Ing.

(57) **Zusammenfassung**

Die Erfindung betrifft eine Wärme- und/oder Schalldämmelement, bestehend aus einer Dämmplatte, vorzugsweise Minerafaserdämmplatte, insbesondere aus Glas- und/oder Steinfasern, welche Dämmplatte auf einer zu dämmenden Fläche, insbesondere Gebäudefassade oder Dachfläche, mit Klebern und/oder Halteelementen im Bereich von Laibungen, beispielsweise im Bereich von Tür- und/oder Fensteröffnungen, befestigbar und für den Auftrag eines Putzes geeignet ist, wobei die Dämmplatte zwei parallel zueinander angeordnete große Oberflächen und zwei an die großen Oberflächen im Längskantenbereich im wesentlichen rechtwinklig angrenzenden und parallel verlaufenden Seitenflächen aufweist. Um ein Wärme- und/oder Schalldämmelement zu schaffen, welches in einfacher und kostengünstiger Weise im Bereich der Dämmung von Laibungen bei Gebäuden verarbeitbar ist, wird vorgeschlagen, daß die Dämmplatte im Bereich einer Längskante und mehrere, zumindest zwei Markierungen als Schneidhilfe aufweist, die parallel zueinander und parallel zur Längskante verlaufend angeordnet sind.

## Beschreibung

Die Erfindung betrifft ein Wärme- und/oder Schalldämmelement bestehend aus einer Dämmplatte, vorzugsweise Mineralfaserdämmplatte, insbesondere aus Glas- und/oder Steinfasern, welche Dämmplatte auf einer zu dämmenden Fläche, insbesondere Gebäudefassade oder Dachfläche, mit Klebern und/oder Halteelementen im Bereich von Laibungen, beispielsweise im Bereich von Tür- und/oder Fensteröffnungen, befestigbar und für den Auftrag eines Putzes geeignet ist, wobei die Dämmplatte zwei parallel zueinander angeordnete große Oberflächen und zwei an die großen Oberflächen im Längskantenbereich im wesentlichen rechtwinklig angrenzenden und parallel verlaufenden Seitenflächen aufweist.

Die Wärme- und Schalldämmung von Gebäudefassaden wird beispielsweise mit sogenannten Wärmedämmverbundsystemen durchgeführt. Diese Wärmedämmverbundsysteme bestehen aus Dämmschichten, die durch mindestens zwei Putzschichten gegen Witterungseinflüsse geschützt werden. Hierbei handelt es sich um einen sogenannten Grund- und einen sogenannten Oberputz, die insgesamt gegen mechanische Einflüsse widerstandsfähige Oberflächen bilden. Der Grundputz muß durch zugaufnehmende Einlagen aus beispielsweise Glasseidengittergewebe oder durch gleichmäßig in der Matrix verteilte Einzelfasern verstärkt werden. Als Wärmedämmverbundsysteme werden definitionsgemäß Systeme mit Dämmschichtdicken von mehr als 4 cm bezeichnet. Zur Verwendung kommen ganz überwiegend Platten aus expandiertem Polystyrol-Hartschaum, aber auch aus Mineralwolle oder aus Porenbeton mit zumeist verringerter Rohdichte. Prinzipiell geeignet sind darüber hinaus auch Dämmstoffe aus Phenolharzschaum, Schaumglas, Hartschäumen aus extrudiertem Polystyrol, Holzwolle-Leichtbauplatten.

Die Dämmschichten werden auf die Gebäudefassade bzw. auf Decken zumeist mit Hilfe von zementgebundenen Bauklebern aufgeklebt und zusätzlich oder allein durch in die tragende Schicht mit Hilfe von Dübeln verankerten Dämmstoffhaltern gesichert. Die Kleberschicht ermöglicht einen teilweisen Ausgleich von Unebenheiten in der tragenden Schicht. Darüber hinaus sind Wärmedämmverbundsysteme bekannt, bei denen die Dämmplatten durch seitlich in die Platten eingreifende Schienen gehalten werden, wobei die tragenden Horizontalschienen selbst mit Hilfe von Dübeln und Schrauben am Gebäude befestigt sind.

Bei der Verarbeitung von derartigen Dämmplatten ist es erforderlich, die Dämmplatten an Öffnungen in den Wand- oder Deckenflächen anzupassen bzw. so heranzuführen, daß die Projektion der Seitenflächenebenen beispielsweise bei Fenstern auf den Blendrahmen, bzw. die Führung von Rolläden oder auf den Türrahmen so trifft, daß beide nur teilweise überdeckt sind. Bei dem üblichen Anschlag von Fenster-Blendrahmen gegen ein halbsteiniges Mauerwerk oder gegen die äußere Mauerwerksschale bei zweischaligen Brandkonstruktionen ergeben sich im Laibungsbereich der Fenster, Türen oder dergleichen maximale Dämmschichtdicken von ca. 2 bis 4 cm. Die Tiefe der Laibung beträgt im allgemeinen ca. 11 bis 14 cm.

Die in diesen Bereichen verwendeten Dämmplatten können auch als Laibungsplatten bezeichnet werden, die auf die zu dämmende Fläche aufklebbar sind. Diese Dämmplatten müssen manuell an die Konturen der Laibung angepaßt werden. Zur Vermeidung von Wärmebrücken ist es erforderlich, die Dämmplatten bzw. Laibungsplatten fugendicht zu verlegen. Hierzu werden die Dämmplatten gegen die Blendrahmen der Fenster, Türen und sonstigen Rahmen gepreßt. Ein dichter und dauerhafter Wärme- und/oder Schallschutz ist hier aber nur in den seltensten Fällen zu erreichen. Es hat sich daher als üblich erwiesen, eventuell bestehende Spalten zwischen den Dämmplatten und den Blendrahmen mit Dichtstoffen auszufüllen, die aber in der Regel zum einen nicht den erforderlichen Wärme- und/oder Schallschutz bieten und zum anderen hinsichtlich der erforderlichen Dichtigkeit nicht zufriedenstellend sind.

Für die Dämmung der Laibungen werden Dämmplatten mit üblichen Abmessungen, beispielsweise 1000 mm x 800 mm verwendet. Das Anpassen dieser Dämmplatten an die Laibungen erfolgt auf der Baustelle mit Schneidwerkzeugen, beispielsweise Messern oder Sägen, wobei die notwendige Bearbeitung manuell ausgeführt wird.

Ausgehend von diesem Stand der Technik liegt der Erfindung die **Aufgabe** zugrunde, ein Wärme- und/oder Schalldämmelement zu schaffen, welches in einfacher und kostengünstiger Weise im Bereich der Dämmung von Laibungen bei Gebäuden verarbeitbar ist.

Die **Lösung** dieser Aufgabenstellung sieht vor, daß die Dämmplatte im Bereich einer Längskante mehrere, zumindest zwei Markierungen als Schneidhilfe aufweist, die parallel zueinander und parallel zur Längskante verlaufend angeordnet sind.

Die erfindungsgemäße Lösung sieht also vor, daß werkseitig vorkonfektionierte Dämmstoffstreifen in bestimmten Breiten vorgesehen sind, die baustellenseitig von der Dämmplatte abgetrennt und zur Verarbeitung im Laibungsbereich verwendet werden können. Hierbei kann einerseits vorgesehen sein, daß die verbleibende, d.h. nach dem Abtrennen eines oder mehrere Dämmstoffstreifen verkleinerte Dämmplatte auf den zu dämmenden Bereich im Bereich einer Laibung abgestimmt ist. Andererseits kann vorgesehen sein, daß die abgetrennten Dämmstoffstreifen für die Dämmung im Bereich der Laibung Verwendung finden.

Nach einem weiteren Merkmal der Erfindung ist vorgesehen, daß die Markierungen als Einschnitte ausgebildet sind. Diese Ausgestaltung hat den Vorteil, daß durch die Einschnitte bereits eine Führung für das Schneidwerkzeug vorgegeben ist.

Alternativ oder ergänzend kann vorgesehen sein, daß die Markierungen als farblich von der Dämmplatte abweichende Linien ausgebildet sind. Insbesondere bei als Einschnitte ausgebildeten Markierungen hat sich die zusätzliche Farbmarkierung als vorteilhaft erwiesen, da bei Mineralwolledämmstoffen mit hoher Dichte die Einschnitte je nach ihrer Breite nicht zweifelsfrei und schnell erkennbar sind. Werden diese Einschnitte aber zusätzlich farblich markiert, so fallen diese Einschnitte dem verarbeitenden Arbeiter unmittelbar auf, so daß hierdurch eine wesentliche Verarbeitungszeitverkürzung ermöglicht wird.

Es ist nach einem weiteren Merkmal der Erfindung vorgesehen, daß die Einschnitte unterschiedlich tief ausgebildet sind. Zum einen kann vorgesehen sein, daß die Einschnitttiefe von der Längskante der Platte ausgehend abnimmt, um eine nicht zu große Schwächung der Dämmplatte insgesamt zu verursachen, so daß die Dämmplatte mit entsprechend tiefen Einschnitten auch insgesamt verarbeitet werden kann, ohne daß die Gefahr des Auseinanderbrechens der Dämmplatte besteht. Andererseits können die unterschiedlich tiefen Einschnitte die Bemessung der zuzuschneidenden Dämmplatte für den speziellen Laibungsbereich dahingehend einfacher angewendet werden, daß beispielsweise jeder fünfte Einschnitt tiefer ausgebildet ist, als die vorhergehenden vier Einschnitte.

Die Einschnitte weisen im wesentlichen eine Tiefe auf, die ungefähr der 0,25 bis 0,75-fachen Materialstärke der Dämmplatte entspricht. Je nach Rohdichte des Dämmstoffmaterials bleibt die Stabilität bei in diesem Tiefenbereich ausgebildeten Einschnitten im wesentlichen bestehen.

Nach einem weiteren Merkmal der Erfindung ist vorgesehen, daß die Markierungen die Dämmplatte in vorkonfektionierte Dämmstoffstreifen in Breiten von 90 bis 200 mm, vorzugsweise 100 bis 130 mm unterteilt. Die vorzugsweise verwendeten Dämmplatten weisen eine Materialstärke zwischen 20 und 200 mm, insbesondere zwischen 50 und 150 mm auf.

Es kann ergänzend vorgesehen sein, daß die Markierungen auf beiden gegenüberliegend angeordneten Oberflächen deckungsgleich angeordnet sind. Weiterhin besteht die Möglichkeit, die Markierungen als linienförmige Perforierungen auszubilden, um die Dämmplatte insgesamt hinsichtlich ihrer Festigkeit nicht zu sehr zu schwächen.

Erfindungsgemäß bestehen die Laibungsplatten aus Mineralwoll-Dämmplatten, bei denen die einzelnen Fasern senkrecht zu den großen Oberflächen orientiert sind. Die Mindest-Querzugfestigkeit der Mineralwolle-Dämmplatten ist größer gleich 40 kPa. Diese Platten haben den Vorteil, daß sie sich quer zu den großen Oberflächen komprimieren lassen und sich somit mit einer gewissen Querspannung in den Raum zwischen äußerer Dämmschicht und angrenzendem Blendrahmen bzw. angrenzendem Abschluß einfügen lassen.

Bei großformatigen Dämmplatten hat es sich als vorteilhaft erwiesen, die Markierungen in Gruppen auf der Oberfläche der Dämmplatte anzuordnen. Der Vorteil dieser Dämmplatten liegt in der rationellen Herstellung und der geringeren Toleranzen der Abmessungen. Es können dann mehrere Laibungsplatten von einer großformatigen Dämmplatte abgetrennt werden.

Nach einem weiteren Merkmal der Erfindung ist vorgesehen, daß die Dämmplatte zumindest im Bereich einer großen Oberfläche eine haftvermittelnde Beschichtung aufweist. Die Beschichtung besteht vorzugsweise aus grobkörnigem Mörtel mit Bindemitteln aus Portlandzement oder Tonerdeschmelzzement in Dicken kleiner gleich 5 mm, insbesondere kleiner gleich 1,5 mm. Vorzugsweise ist der Mörtel mit alkalibeständigen Chloropren-Latices elastifiziert.

Es hat sich ferner als vorteilhaft erwiesen, die Dämmplatte im Bereich der, den Markierungen gegenüberliegenden, parallel zur Längskante verlaufenden Seitenfläche mit einer Ausnehmung zur Aufnahme eines Randeinfassungswinkels auszubilden, die parallel zu den großen Oberflächen verlaufend angeordnet ist. Vorzugsweise ist die Ausnehmung nutförmig ausgebildet. Der Randeinfassungswinkel kann hierbei aus nichtrostendem Stahl, Kunststoff oder faserverstärkten Kunststoffen bestehen und ist L-förmig ausgebildet. Es besteht ferner die Möglichkeit, daß der Randeinfassungswinkel im unteren Bereich U-förmig ausgestaltet ist, um auch leicht über die äußere Oberfläche der Dämmplatte geschoben zu werden, wodurch ein festerer Sitz des Randeinfassungswinkels erzielbar ist.

Nach einem weiteren Merkmal ist vorgesehen, daß die Ausnehmung zumindest teilweise mit einem Klebemittel gefüllt ist, so daß der Randeinfassungswinkel mit der Dämmplatte verklebbar ist.

Es ist ferner nach einem weiteren Merkmal der Erfindung vorgesehen, daß die Ausnehmung im Bereich einer Oberfläche angeordnet ist, insbesondere die Dämmplatte in ihrer Materialstärke in zwei Abschnitte unterteilt ist, wobei ein Anteil einer Materialstärke von 0,25 bis 0,45 zu 0,75 bis 0,55 der Gesamtdicke der Dämmplatte entspricht. Demzufolge ist die seitliche Nut möglichst nahe zu der in der Dämmschicht außenliegenden Oberfläche der Dämmplatte anzuordnen, um einen Wärmebrückeneffekt vor allem metallischer Randeinfassungswinkel zu vermeiden bzw. zu vermindern. Der Randeinfassungswinkel ist hierbei derart ausgebildet, daß er einen glatten und haftfähigen Abschluß für Putzschichten darstellt, die als Dichtstoffe zwischen den Blendrahmen und der Dämmplatte eingefüllt werden.

Vorzugsweise weist die Dämmplatte im Bereich der gegenüberliegenden, parallel zur Längskante verlaufenden Seitenfläche, in deren Bereich die Markierungen angeordnet sind, einen Vorsprung auf. Dieser Vorsprung liegt bei ordnungsgemäß eingebauter Dämmplatte im Laibungsbereich an der Laibung bzw. am Blendrahmen an, so daß eine vollflächige Dämmung erzielt wird. Oberhalb dieses Vorsprungs entsteht bei ordnungsgemäß verbauter Dämmplatte ein Spalt zwischen Blendrahmen und Dämmplatte, der mit Dichtstoffen ausfüllbar ist. Der Vorsprung hat vorzugsweise eine Länge von 10 bis 25 mm.

Weitere Merkmale und Vorteile ergeben sich aus der nachfolgenden Beschreibung dazugehörigen Zeichnung, in der bevorzugte Ausführungsformen des erfindungsgemäßen Wärme- und/oder Schalldämmelementes dargestellt sind. In der Zeichnung zeigen:
- Figur 1: eine erste Ausführungsform eines Wärme- und/oder Schalldämmelementes in perspektivischer Ansicht;
- Figur 2: eine zweite Ausführungsform eines Wärme- und/oder Schalldämmelementes in perspektivischer Ansicht;
- Figur 3: eine dritte Ausführungsform eines Wärme- und/oder Schalldämmelementes in Seitenansicht;
- Figur 4: das Wärme- und/oder Schalldämmelement gemäß Figur 3 mit einem Randeinfassungswinkel und aufgetragenen Putzschichten;
- Figur 5: eine vierte Ausführungsform eines Wärme- und/oder Schalldämmelementes in Seitenansicht und
- Figur 6: das Wärme- und/oder Schalldämmelement gemäß den Figuren 1 oder 2 in einer Einbaustellung in Seitenansicht.

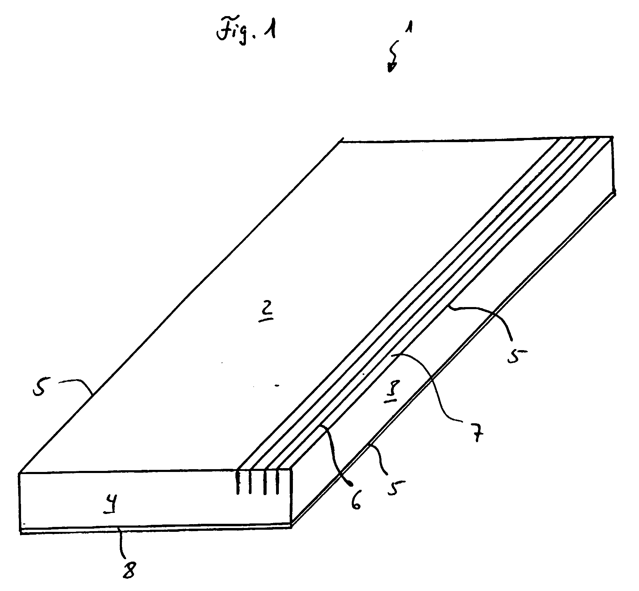

In Figur 1 ist eine Dämmplatte 1 in perspektivischer Ansicht dargestellt. Die Dämmplatte 1 ist als Paralellepiped ausgebildet und weist zwei parallel zueinander ausgerichtete große Oberflächen 2, zwei parallel zueinander ausgerichtete Längsseiten 3 und zwei parallel zueinander ausgerichtete Schmalseiten 4 auf. Die Längsseiten 3 und die Schmalseiten 4 sind rechtwinklig zueinander angeordnet. Ferner sind die Längsseiten 3 und die Schmalseiten 4 rechtwinklig zu den Oberflächen 2 angeordnet, so daß die Dämmplatte 1 im Übergangsbereich zwischen jeder Längsseite 3 und einer Oberfläche 2 eine Längskante 5 hat.

Die Dämmplatte besteht aus mit Bindemitteln gebundenen Steinfasern und weist eine Materialstärke von 100 mm auf. Die Mindest-Querzugfestigkeit der Dämmplatte 1 liegt bei mehr als 40 kPa. Ferner weist die Dämmplatte 1 eine Länge von 1000 mm und eine Breite von 800 mm auf.

Im Bereich einer großen Oberfläche 2 sind vier Markierungen 6 angeordnet, wobei die Markierungen 6 als parallel zur Längskante 5 verlaufende Einschnitte ausgebildet sind. Jede Markierung 6 ist darüber hinaus im Bereich der großen Oberfläche 2 als farblich von der Dämmplatte 1 abweichende Linie ausgebildet, so daß die als Einschnitte ausgebildeten Markierungen 6 deutlich sichtbar sind. Die Markierungen 6 dienen als Schneidhilfe und sind durch ihre Ausbildung als nutförmige Einschnitte geeignet, ein Schneidwerkzeug sicher zu führen.

Entlang der Markierungen 6 kann die Dämmplatte 1 auf ein entsprechendes Breitenmaß reduziert werden. Durch die sichere Führung des Schneidwerkzeugs in den als Einschnitte ausgebildete Markierungen 6 besteht ferner die Möglichkeit, abgeschnittene Faserstreifen 7 für Wärme- und/oder Schalldämmzwecke zu verwenden.

Durch das Abtrennen der Streifen 7 von der Dämmplatte 1 kann die Dämmplatte 1 für die Verwendung im Bereich von Laibungen als sogenannte Laibungsplatte angepaßt werden, um einen dichten Anschluß der Dämmplatte 1 an einen Blendrahmen zu ermöglichen.

Die Tiefe der als Einschnitte ausgebildeten Markierungen 6 beträgt das 0,5 fache der Materialstärke der Dämmplatte 1, somit 50 mm. Hierdurch wird eine ausreichende Stabilität der Dämmplatte 1 gewährleistet, die eine Verarbeitung der Dämmplatte 1 ohne Zuschnitt bzw. mit lediglich einem entfernten Streifen 7 in üblicher Weise ermöglicht. Die Markierungen 6 sind in gleichmäßigem Abstand zueinander angeordnet. Die Abstände zwischen zwei benachbarten Markierungen beträgt genauso wie der Abstand der ersten Markierung zur Längskante 5 100 mm.

Auf der der Oberfläche 2 mit den Markierungen 6 gegenüberliegenden Oberfläche 2 weist die Dämmplatte 1 eine haftvermittelnde Beschichtung 8 auf, die werksseitig vollflächig aufgetragen ist und aus grobkörnigen Mörteln mit Bindemitteln aus Portlandzement oder Tonerdeschmelzzement besteht. Die Dicke der Beschichtung ist 1 mm, wobei der Mörtel mit alkalibeständigen Chloropren-Latices elastifiziert ist.

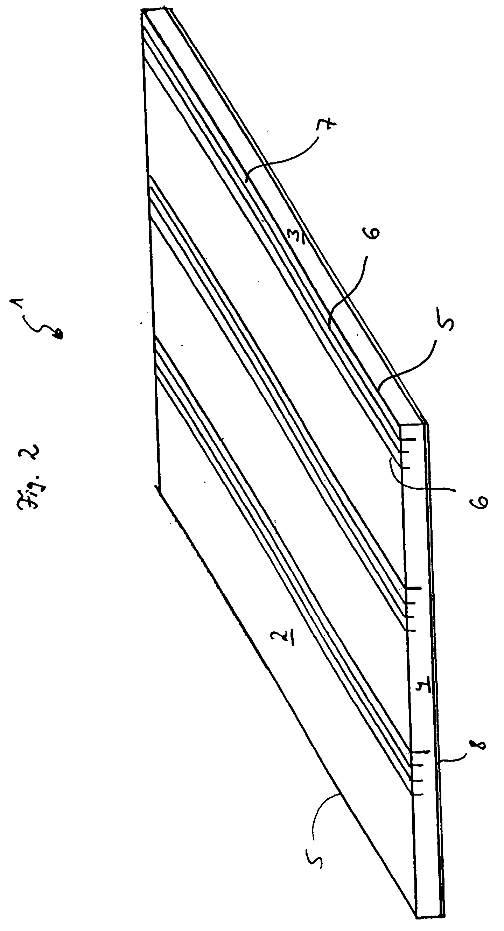

In Figur 2 ist eine weitere Ausführungsform der Dämmplatte 1 dargestellt. Bei dieser Ausführungsform handelt es sich um eine großformatige Dämmplatte 1, bei der die Markierungen 6 in Gruppen angeordnet sind. Es ist erkennbar, daß jeweils eine als Einschnitt ausgebildete Markierung 6 tiefer ausgebildet ist, als die weiteren Einschnitte, so daß dem Verarbeiter deutlich angezeigt wird, an welcher Stelle er die großformatige Dämmplatte 1 in Dämmplatten 1 gemäß Figur 1 unterteilen kann. Es besteht aber auch die Möglichkeit, eine durch die Markierungen 6 vorgegebene andere Aufteilung der Dämmplatte 1 zu wählen, wobei die Aufteilung der Dämmplatte 1 gemäß Figur 2 letztendlich von den Baustellengegebenheiten abhängig ist.

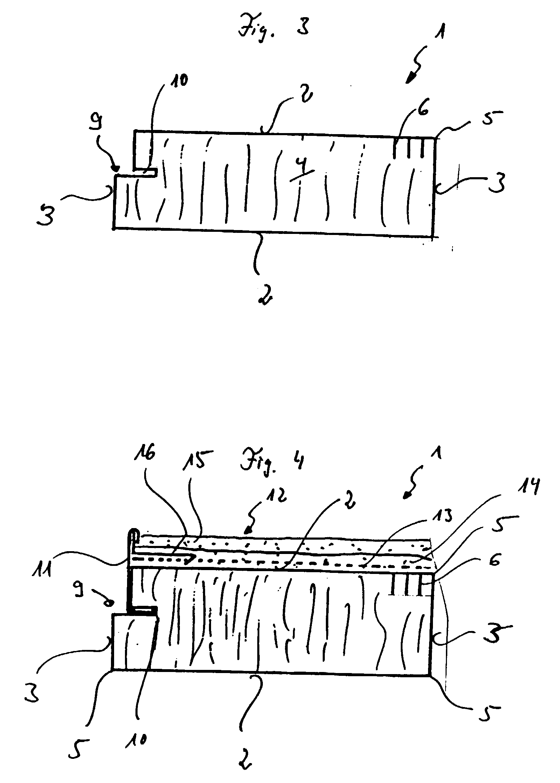

Eine weitere Ausführungsform einer erfindungsgemäßen Dämmplatte 1 ist in den Figuren 3 und 4 dargestellt. Diese Dämmplatte 1 gemäß Figur 3 unterscheidet sich von der Dämmplatte 1 gemäß Figur 1 dadurch, daß die im Bereich der gegenüberliegenden, parallel zur Längskante 5 verlaufenden Längsseiten 3, in deren Bereich die Markierungen 6 angeordnet sind, einen Vorsprung 9 aufweist. Der Vorsprung 9 hat eine Materialstärke, die ungefähr der Materialstärke der gesamten Dämmplatte 1 entspricht. Oberhalb des Vorsprungs 9 weist die Dämmplatte 1 einen parallel zu den großen Oberflächen verlaufenden Einschnitt 10 zur Aufnahme eines Randeinfassungswinkels 11 gemäß Figur 4 auf.

Dieser Randeinfassungswinkel 11, der beispielsweise aus Metall oder Kunststoff bestehen kann, stellt zum einen eine Verbindung zwischen der Dämmplatte 1 und einer aufgetragenen Putzschicht 12 dar und dient zum anderen einem sauberen Abschluß der aus den Dämmplatten 1 im Bereich eines Blendrahmens einer Fensteröffnung oder einer Türöffnung gebildeten Dämmschicht, wobei ein etwaiger Spaltraum zwischen dem Randeinfassungswinkel 11 und dem nicht näher dargestellten Blendrahmen durch übliche Dichtstoffe ausgefüllt werden kann.

Die Putzschicht 12 besteht aus einem mit einem Armierungsgewebe 13 armierten Grundputz 14 und einem Deckputz 15.

Der Randeinfassungswinkel 11 ist im wesentlichen L-förmig ausgebildet, wobei sein längerer, über die Oberfläche 2 hinausragender Schenkel umgebördelt ist, um mit einem Hakenelement 16 verbunden zu werden, welches ebenfalls L-förmig ausgebildet ist und mit einem längeren Schenkel im Grundputz 14, insbesondere im Armierungsgewebe 13 verhakt ist.

Bei dem Ausführungsbeispiel gemäß den Figuren 3 und 4 bietet der Vorsprung 9 den Vorteil, daß die Dämmplatte 1 bis an den Blendrahmen heranreicht.

Hierbei ist vorgesehen, daß die Dämmplatte 1 einen Faserverlauf aufweist, der im wesentlichen rechtwinklig zu den großen Oberflächen 2 ausgerichtet ist, so daß die Dämmplatte 1 in einer Richtung parallel zu den großen Oberflächen kompressibel und zwischen einem Blendrahmen und bereits aufgeklebten Dämmplatten 1 unter Preßspannung einsetzbar ist. Es ist daher nicht zwingend erforderlich, die Dämmplatte 1 im Bereich der Markierungen 6 millimetergenau zuzuschneiden. Vielmehr reicht es aus, daß die Dämmplatte 1 mit einem gegenüber dem Einbau geringem Übermaß zugeschnitten und eingepaßt wird.

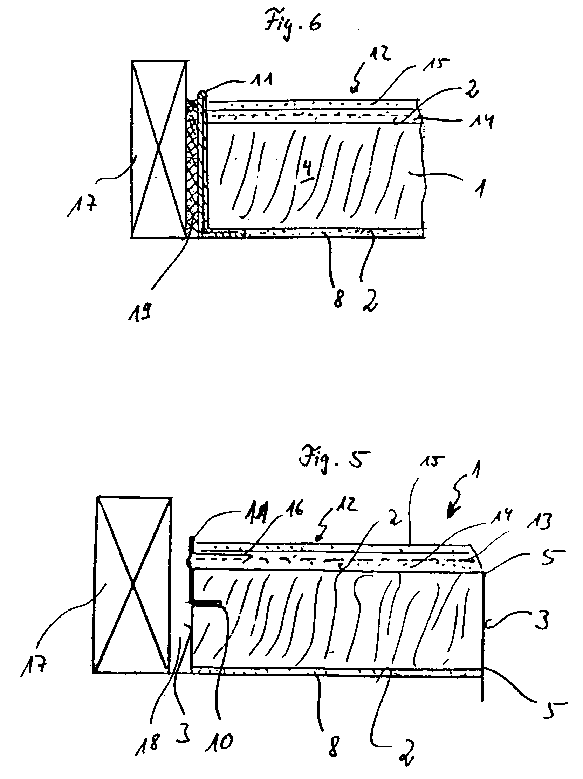

In Figur 5 ist eine weitere Ausführungsform der Dämmplatte 1 dargestellt, die im wesentlichen mit der Dämmplatte 1 gemäß Figur 1 übereinstimmt. Ergänzend ist aber bei dieser Dämmplatte 1 gemäß Figur 5 der parallel zu den großen Oberflächen verlaufende Einschnitt 10 vorgesehen, der wiederum der Aufnahme des Randeinfassungswinkels 11 dient. Bei diesem Ausführungsbeispiel ist der Einschnitt 10 mit einem Kleber gefüllt, der durch das Einschieben des Randeinfassungswinkels 11 aktiviert wird, so daß der Randeinfassungswinkel 11 mit der Dämmplatte 1 verklebt wird. In Figur 5 ist darüber hinaus der Blendrahmen 17 dargestellt, wobei zwischen dem Blendrahmen 17 und dem Randeinfassungswinkel 11 ein Spalt 18 verbleibt, der mit üblichem Dichtmaterial ausgefüllt werden kann. Hierzu ist es von Vorteil, zumindest den an der Längsseite 3 der Dämmplatte 1 anliegenden Schenkel des Randeinfassungswinkels 11 gelocht auszubilden, um eine direkte Verbindung zwischen dem Dichtmaterial und der Dämmplatte 1 einerseits bzw. dem Dichtmaterial und der Putzschicht 12 andererseits zu ermöglichen. Selbstverständlich besteht auch die Möglichkeit, den Randeinfassungswinkel 11 abweichend U-förmig auszubilden, so daß er mit einem Schenkel in den Einschnitt 10 eingreift und mit dem zweiten Schenkel auf der Oberfläche der Putzschicht 12 oder in der Putzschicht 12 angeordnet ist.

Schließlich ist in Figur 6 eine Ausführungsform einer Dämmplatte 1 im Einbauzustand dargestellt, bei der der Randeinfassungswinkel 11 als kunststoffummanteltes Profil ausgebildet ist, so daß der Randeinfassungswinkel 11 mit einem Schenkel auf der zu dämmenden Oberfläche aufliegt und der zweite Schenkel die gesamte Längsseite 3 der Dämmplatte 1 abdeckt. Zwischen dem Randeinfassungswinkel 11 und dem Blendrahmen ist ein Füllprofil 19 angeordnet, welches beispielsweise aus einem mineralischem Schaum bestehen kann. Durch die Ummantelung des Randeinfassungswinkels 11 in dem Ausführungsbeispiel gemäß Figur 6 wird durch den Randeinfassungswinkel 11 keine Wärmebrücke verursacht, die die Anordnung des Randeinfassungswinkels 11 entfernt von der zu dämmenden Fläche erforderlich macht. Der Randeinfassungswinkel 11 weist hierbei einen metallischen Kern auf, der vollständige oder teilweise an seinen äußeren Flächen mit PUR- oder PIR-Hartschaum mit einer Rohdichte zwischen 40 und 120 kg/m³ ummantelt ist.

## Patentansprüche

1. Wärme- und/oder Schalldämmelement, bestehend aus einer Dämmplatte (1), vorzugsweise Mineralfaserdämmplatte, insbesondere aus Glas- und Steinfasern, welche Dämmplatte (1), auf einer zu dämmenden Fläche, insbesondere Gebäudefassade oder Dachfläche, mit Klebern und/oder Halteelementen im Bereich von Laibungen, beispielsweise im Bereich von Tür- und/oder Fensteröffnungen, befestigbar und für den Auftrag eines Putzes (12) geeignet ist, wobei die Dämmplatte (1) zwei parallel zueinander angeordnete große Oberflächen (2) und zwei an die großen Oberflächen (2) im Längskantenbereich im wesentlichen rechtwinklig angrenzenden und parallel verlaufenden Seitenflächen (3) aufweist,
**dadurch gekennzeichnet,**
daß die Dämmplatte (1) im Bereich einer Längskante (5) und mehrere, zumindest zwei Markierungen (6) als Schneidhilfe aufweist, die parallel zueinander und parallel zur Längskante (5) verlaufend angeordnet sind.

2. Dämmelement nach Anspruch 1,
**dadurch gekennzeichnet,**
daß die Markierungen (6) als Einschnitte ausgebildet sind.

3. Dämmelement nach Anspruch 1,
**dadurch gekennzeichnet,**
daß die Markierungen (6) als farblich von der Dämmplatte (1) abweichende Linien ausgebildet sind.

4. Dämmelement nach Anspruch 2,
**dadurch gekennzeichnet,**
daß die Einschnitte unterschiedlich tief ausgebildet sind.

5. Dämmelement nach Anspruch 2,
**dadurch gekennzeichnet,**
daß die Einschnitte eine Tiefe aufweisen, die im wesentlichen der 0,25 bis 0,75-fachen Materialstärke der Dämmplatte (1) entspricht.

6. Dämmelement nach Anspruch 1,
**dadurch gekennzeichnet,**
daß die Markierungen (6) die Dämmplatte (1) in vorkonfektionierte Dämmstoffstreifen (7) in Breiten von 90 bis 200 mm, vorzugsweise 100 bis 130 mm unterteilt.

7. Dämmelement nach Anspruch 1,
**dadurch gekennzeichnet,**
daß die Dämmplatte (1) eine Materialstärke zwischen 20 und 200 mm, insbesondere zwischen 50 und 150 mm aufweist.

8. Dämmelement nach Anspruch 1,
**dadurch gekennzeichnet,**
daß die Markierungen (6) auf beiden gegenüberliegend angeordneten Oberflächen (2) deckungsgleich angeordnet sind.

9. Dämmelement nach Anspruch 1,
**dadurch gekennzeichnet,**
daß die Markierungen (6) als linienförmige Perforierungen ausgebildet sind.

10. Dämmelement nach Anspruch 1,
**dadurch gekennzeichnet,**
daß die Dämmplatte (1) überwiegend Mineralfasern aufweist, die rechtwinklig zu den großen Oberflächen (2) ausgerichtet sind.

11. Dämmelement nach Anspruch 1,
**dadurch gekennzeichnet,**
daß die Dämmplatte (1) aus Mineralfasern eine Mindest-Querzugfestigkeit von größer 40 kPa aufweist.

12. Dämmelement nach Anspruch 1,
**dadurch gekennzeichnet,**
daß die Markierungen (6) in Gruppen auf der Oberfläche (2) der Dämmplatte (1) angeordnet sind.

13. Dämmelement nach Anspruch 1,
**dadurch gekennzeichnet,**
daß die Dämmplatte (1) zumindest im Bereich einer großen Oberfläche (2) eine haftvermittelnde Beschichtung (8) aufweist.

14. Dämmelement nach Anspruch 13,
**dadurch gekennzeichnet,**
daß die Beschichtung (8) aus grobkörnigen Mörteln mit Bindemitteln aus Portlandzement oder Tonerdeschmelzzement in Dicken kleiner gleich 5 mm, insbesondere kleiner gleich 1,5 mm besteht.

15. Dämmelement nach Anspruch 14,
**dadurch gekennzeichnet,**
daß der Mörtel mit alkalibeständigen Chloropren-Latices elastifiziert ist.

16. Dämmelement nach Anspruch 1,
**dadurch gekennzeichnet,**
daß die Dämmplatte (1) im Bereich der gegenüberliegenden, parallel zur Längskante (5) verlaufenden Seitenfläche (3) eine Ausnehmung (10) zur Aufnahme eines Randeinfassungswinkels (11) aufweist, die parallel zu den großen Oberflächen (2) verlaufend angeordnet ist.

17. Dämmelement nach Anspruch 16,
**dadurch gekennzeichnet,**
daß die Ausnehmung (10) nutförmig ausgebildet ist.

18. Dämmelement nach Anspruch 16,
**dadurch gekennzeichnet,**
daß die Ausnehmung (10) zumindest teilweise mit einem Klebemittel befüllt ist, mit dem der Randeinfassungswinkel (11) mit der Dämmplatte (1) verklebbar ist.

19. Dämmelement nach Anspruch 16,
**dadurch gekennzeichnet,**
daß die Ausnehmung (10) im Bereich einer Oberfläche (2) angeordnet ist, insbesondere die Dämmplatte (1) in ihrer Materialstärke in zwei Abschnitte unterteilt, die einen Anteil an der Materialstärke von 0,25 bis 0,45 zu 0,75 bis 0,55 aufweisen.

20. Dämmelement nach Anspruch 1,
**dadurch gekennzeichnet,**
daß die Dämmplatte (1) im Bereich der gegenüberliegenden, parallel zur Längskante (5) verlaufenden Seitenfläche (3) in deren Bereich die Markierungen (6) angeordnet sind, einen Vorsprung (9) aufweist.

21. Dämmelement nach Anspruch 20,
**dadurch gekennzeichnet,**
daß der Vorsprung (9) eine Länge von 10 bis 25 mm aufweist.
